Europäisches Patentamt

European Patent Office

Office européen des brevets

(11) Publication number: **0 195 950**
A2

# (12) EUROPEAN PATENT APPLICATION

(21) Application number: 86102571.6

(22) Date of filing: 27.02.86

(51) Int. Cl.⁴: **H 02 M 1/08,** H 02 M 7/538

(30) Priority: **28.02.85 IT 4775385**

(71) Applicant: **SELENIA SPAZIO S.p.A., via Pile 3, I-67100 L'Aquila (IT)**

(43) Date of publication of application: **01.10.86**
**Bulletin 86/40**

(72) Inventor: **Roccucci, Silvio, Largo Belloni 4, Roma (IT)**

(84) Designated Contracting States: **AT BE CH DE FR GB LI NL SE**

(74) Representative: **Gustorf, Gerhard, Dipl.-Ing., Mühlenstrasse 1, D-8300 Landshut (DE)**

(54) Device which synchronizes free running oscillator frequency by means of a feedback saturable transformer and square wave output voltage.

(57) A new device meant to synchronize free running oscillator frequency with a feedback saturable transformer and square wave output voltage.

It may find application in space or ground uses. Its uniqueness is given by the insertion within the feedback circuit (made up of a saturable transformer) of a synchronizing circuit which causes feedback transformer saturation at times strictly dependent upon synchronism generator, without impeding frequency adjustment by means of a potentiometer.

**PATENTANWALT**
**DIPL.-ING. GERHARD GUSTORF**
EUROPEAN PATENT ATTORNEY

MÜHLENSTRASSE 1
D-8300 LANDSHUT

Telefon Büro:   08 71 / 8 93 71
Privat:   08 71 / 2 57 19

PA 1 704 EP

SELENIA SPAZIO S.p.A.
Via Pile 3
L´Aquila, Italia

---

Device which synchronizes free running oscillator frequency by means of a feedback saturable transformer and square wave output voltage

---

## Description

This invention relates to free running transistor or FET low, medium and high power inverters. It concerns free running inverter/converter frequency synchronization, succeeding in keeping constant their frequency regardless of varying load and supply voltage, without altering the peculiar characteristics of saturable transfor free running inverters.

Previous solutions were aimed at fixed frequency and square waveform inverters, which generally adopted external drivers for the power transistors or $FET_s$ of the inverter.

The most common drawbacks of such inverters are:

highly complex drivers;

power transistors or FET$_s$ not always operating within their safety area during switchings times;

protection against short circuits and overloads by means of rather complex circuits; and

risk of simultaneous ON condition of the power transistors or FET$_s$ during switching/

The adoption of the synchronizing device described here as well as assuring inverter constant frequency, also yields the following advantages:

more simple and reliable driving and synchronizing circuits;

absence of simultaneous ON condition of power transistor or FET$_s$ during switching times; and

higher efficiency.

The main areas of application are:

A. Space:

auxiliary low and medium power supplies to feed satellite control circuits and to feed telecommunication trasponders or radars.

b   B. Ground:

A.C. square wave and fixed frequency generators power rated from few Watts to 10 KW, or more, depending on the needs of the load and of the nonstabilized D.C. supply (24 Vcc, 48Vcc, 110Vcc; 220Vcc etc.);

0195950

generator as above, but with an externally accessible command to vary its frequency.

The invention will not be described as an illustration, but is not limited to this, with reference to the schematic and figures attached, to then proceed with a detailed description of its operation.

FIG. 1 shows the synchronizing device block diagram, which is the object of this invention in its general and preferred configuration so that it may be considered the most significant figure - there.

1. is the primary source power supply voltage

2. is the input filter

3. is the main oscillator

4. is the differentiator

5. is the synchronizing circuit

6. is the feedback saturable transformer

7. is the limiting resistor

8. is the power

9. is the load

FIGS. 2A to 2F show the following waveforms:

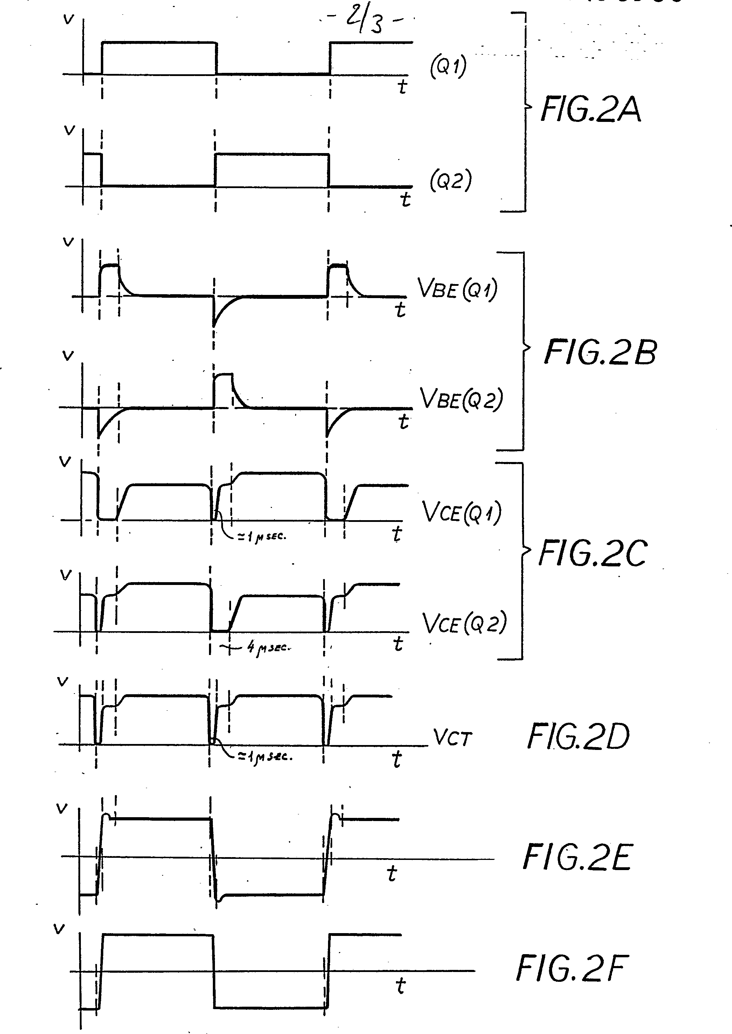

FIG. 2A - main oscillator output voltage waveform;

FIG. 2B - differentiator output voltage waveform;

FIG. 2C - synchronizing circuit output voltage waveform;

FIG. 2D - feedback saturable transformer T, winding 4-5-6 center top voltage waveform;

FIG. 2E - power inverter transistors Q3-Q4 driver A.C. voltage waveform; and

FIG. 2F - power inverter A.C. voltage output waveform.

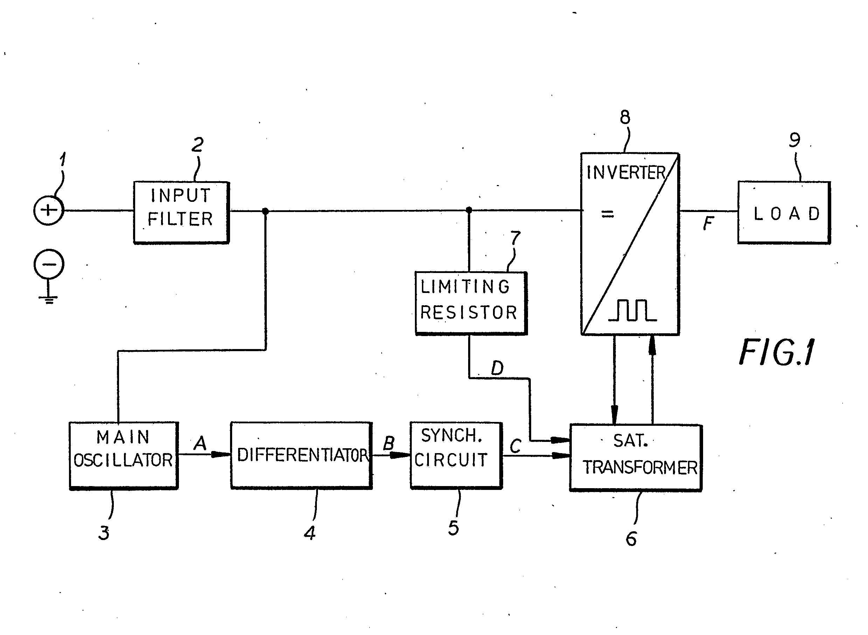

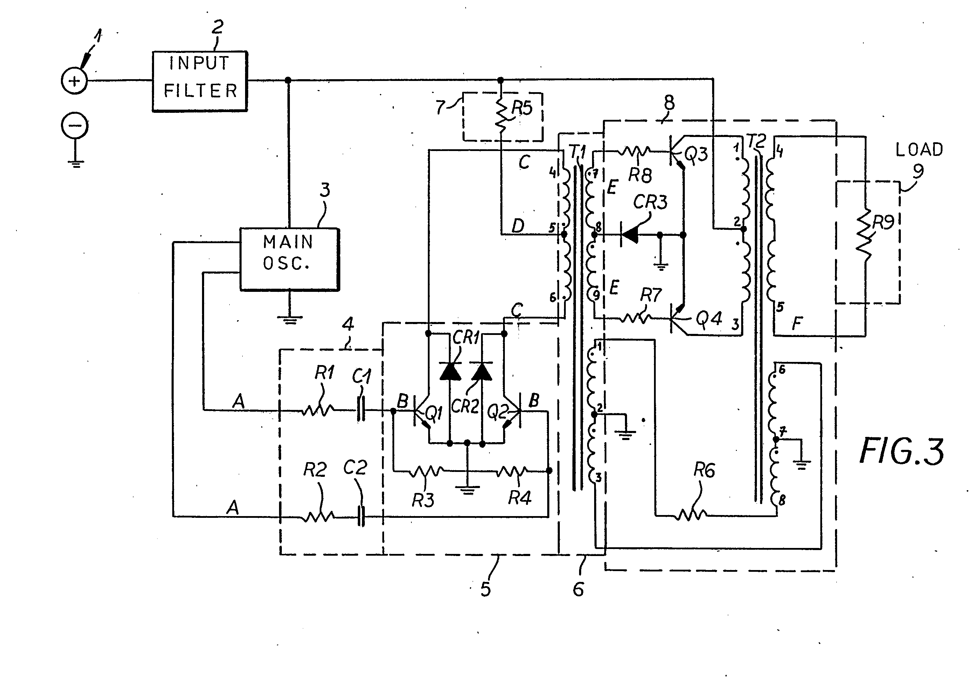

FIG.3 shows the electrical schematic (shown by blocks 4,5,6,7,8 and 9 of FIG. 1) including: the input filter and main oscillator blocks 2 and 3, differentiator (4) synchronism circuit (5), the feedback saturable transformer T1(6), limiting resistor R5 (7), inverter (8) and load (9).

Let us know proceed with the description of operation, with reference to the figures:

A primary D.C. voltage is connected to line 1 (FIG.1) and by the latter to input filter 2. This is a conventional filter and saves to reduce the value of A.C. rejected back toward the primary source and of noise coming from the source and moving toward the inverter.

The filter 2 output line feeds the feedback saturable transformer free running inverter 8.

The main oscillator 3, utilizing an IC or conventional discrete components, sends a square wave signal (FIG.2A) to differential 4.

Such signal, differentiated (FIG.2B), drives a synchronism circuit 5 which acts suitably upon feedback saturation transformer 6 so as to maintain inverter 8 frequency constant with respect to load 9 and supply voltage 1 variations. Limiting resistor R5(7), during the time the synchronism signal is at work ($\simeq 4 \mu sec$), has the task to limit the current drawn by a peculiar winding of the feedback saturable transformer 6 from the supply line.

FIG. 3 shows in detail the electronic circuits of interest, which may be better understood upon examination of the waveforms shown in FIGS. 2A, 2B, 2C, 2D, 2E, 2F, and 2G.

Main oscillator 3 sends a signal (FIG. 2A) to differentiator 4, consisting of 2 resistors and two capacitors $R_1 C_1$, $R_2 C_2$.

The output signal is applied to the synchronization circuit.

Synchronizing circuit 5 consists of transistors $Q_1$, $Q_2$, diodes CR1, CR2 and resistors R3, R4; the collectors of transistors $Q_1$ $Q_2$ are respectively connected to terminals 4 and 6 of the feedback saturable transfomer T1, which utilizes magnetic material such as Mumetal, Hypersil etc. It serves to bear in mind that before proceeding further, inverter 8, without this auxiliary winding (terminals 4,5,6) on saturable transformer T1, would sustain self oscillation at a frequency quite lower than that set by the synchronizing device. Further terminals 1,2,3 of T1 are those of the feedback winding, driven by the winding on T2 (terminals 6,7,8), while terminals 4,5,6 of T1 are those of the winding acted upon by the synchronism.

A short description of FIGS. 2C, 2D, 2E and FIG. 2F will help to understand device operation.

FIG.2C shows transistors $Q_1$-$Q_2$ collector to emitter voltage waveforms.

Comparing FIG.2C with 2A and 2B, it will be seen that when the differentiator 4 output is applied to the bases of $Q_1$ or $Q_2$, the collector voltage affected falls to zero, short circuiting winding 4,5,6 of T1, thanks also to diodes CR1, CR2. This short circuit lasts as long as power inverter 8 $Q_3$ $Q_4$ recovery time, which is about 1 $\mu$.

Next, the presence of line voltage 1 on tterminals 5 of T1, obtained through limiting resistor R5, causes magnetic flus inversion. To this end, the signal applied to $Q_1$, $Q_2$ bases is set at about 4 $\mu$,-which assures also in the worst load and temperature eases, perfect synchronization.

FIG. 2C further highlights the voltage between $Q_1$ and $Q_2$ collector and emitter, which, as well as value zero which corresponds to a short circuit, also has two other voltage levels; one higher and the other lower, due to the combination of AC and DC voltages present on T1 terminal 5 center top.

FIG. 2D shows the voltage waveform on T1 terminal 5 center top. The short circuit condition, during recovery time on the power inverter, followed by magnetic flux inversion with $Q_1$ and $Q_2$ still conducting, can here be clearly seen.

When $Q_1$ and $Q_2$ stops conducting, the voltage on T1 terminal 5 is equal to that of supply voltage 1.

FIGS. 2E and 2F finally show respectively the power inverter driver AC voltage waveform and the AC output voltage waveform of the same.

## Claims

1.    Device which synchronizes the frequency of free running inverters by means of a saturable transformer, inclusive of a main oscillator 3, a differentiator 4, a synchronizing circuit 5, a saturable transformer 6, a limiting resistor 5, a power inverter 8, all in a substantially conventional configuration, characterized by the fact that synchronizing circuit 5, as soon as the output signal of differentiator 4 is present, short circuits saturable transformer 6 and at the end of power inverter 8 recovery time, by means of the current flowing from the DC supply line through resistor 7, dictates flux inversion in the saturable transformer.

2.    Synchronizing circuit as per vclaim 1 which is characterized by the fact that the synchronizing circuit, which indludes two transistors ($Q_1$, $Q_2$ FIG. 3), two diodes (CR1, CR2, FIG. 3) and a resistor $R_4$ FIG.3, limiting the DC flowing into the saturable transformer for flux inversion.

3. Synchronizing circuit, according to claims 1 and 2, characterized by the fact that the power inverter is automatically protected from output short circuit like a conventional free running inverter.

FIG.1

0195950

0195950

- 2/3 -

FIG.2A

FIG.2B

FIG.2C

FIG.2D

FIG.2E

FIG.2F

FIG.3

LOAD

INPUT FILTER

MAIN OSC.